# EUROPEAN PATENT APPLICATION

(11) **EP 3 427 976 A1**
(43) Date of publication of application: **16.01.2019**
(21) Application number: 17763024.1
(22) Date of filing: 28.02.2017
(51) Int. Cl.: B60C 5/00, B29D 30/08, B60C 5/01, B60C 19/00

(54) **PNEUMATIC TIRE AND METHOD FOR MANUFACTURING PNEUMATIC TIRE**

(30) Priority: 11.03.2016 JP 2016048630
(71) Applicant: Bridgestone Corporation, Tokyo 104-8340 (JP)
(72) Inventor: HASEGAWA, Keiichi, Tokyo 104-8340 (JP); KOUNO, Yoshihide, Tokyo 104-8340 (JP)
(74) Representative: Oxley, Robin John George
(86) International application number: PCT/JP2017/007975
(87) International publication number: WO 2017/154684

(57) **Abstract**

A pneumatic tire includes: a tire frame member having a tire inner surface made of a resin material; and a sound absorbing body that is made of a thermoplastic resin material, that is configured to absorb sound, and that is coupled to the tire inner surface via a welded portion.

## Description

### Technical Field

The present disclosure relates to a pneumatic tire and a method of manufacturing a pneumatic tire.

### Background Art

Japanese Patent Application Laid-Open (JP-A) No. 2010-201997 discloses a tire on which a sound absorbing body is attached to an inner surface of the tire in order to reduce a cavity resonance sound occurring inside a pneumatic tire during driving of a vehicle.

### SUMMARY OF INVENTION

### Technical Problem

In a typical rubber tire, a layer containing silicone exists on an inner surface (an inner liner surface) of the tire. The layer is a silicone-based releasing agent applied for the purpose of preventing adhesion between a bladder and the inner surface of the tire during vulcanization of the tire.

However, in order to bond the sound absorbing body to the inner surface of the tire, a removal process of burning off and cutting off the layer containing the silicone with a laser, or mechanically peeling off the layer by a buff or the like and then washing carefully the inner surface of the tire is required.

In addition, in order to bond the sound absorbing body to the inner surface of the tire, a process of disposing an adhesive layer (for example, a double-sided tape-like glue) on the sound absorbing body is required. Costs have increased due to these processes.

An object of the present disclosure is to provide a pneumatic tire on which a sound absorbing body is disposed at low cost.

### Solution to Problem

A pneumatic tire according to the present disclosure includes: a tire frame member having a tire inner surface made of a resin material; and a sound absorbing body that is made of a thermoplastic resin material, that is configured to absorb sound, and that is coupled to the tire inner surface via a welded portion.

### Advantageous Effects of Invention

By the pneumatic tire according to the disclosure, it is possible to obtain an excellent effect capable of providing the pneumatic tire on which the sound absorbing body is disposed

### BRIEF DESCRIPTION OF DRAWINGS

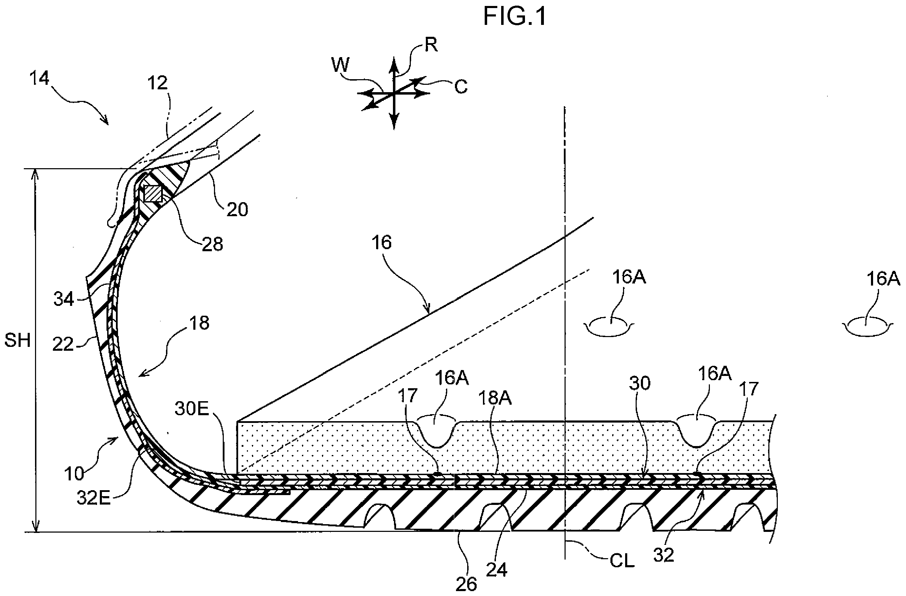

Fig. 1 is a cross-sectional view showing a state in which a pneumatic tire according to the present embodiment is cut in an axial direction of the tire.

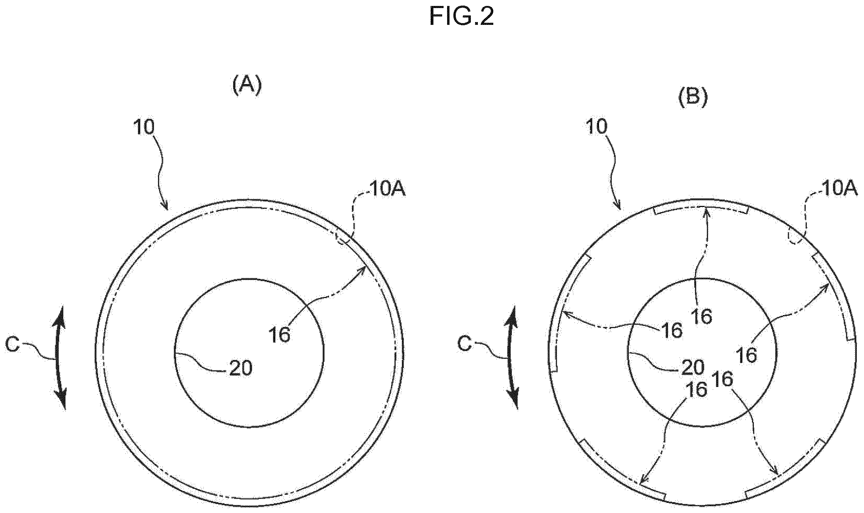

Fig. 2(A) is a side view schematically showing an example in which a sound absorbing body is disposed in the entirety of a tire circumferential direction, in the pneumatic tire according to the present embodiment. Fig. 2(B) is a side view schematically showing an example in which the sound absorbing body is discretely disposed in the tire circumferential direction, in the pneumatic tire according to the present embodiment.

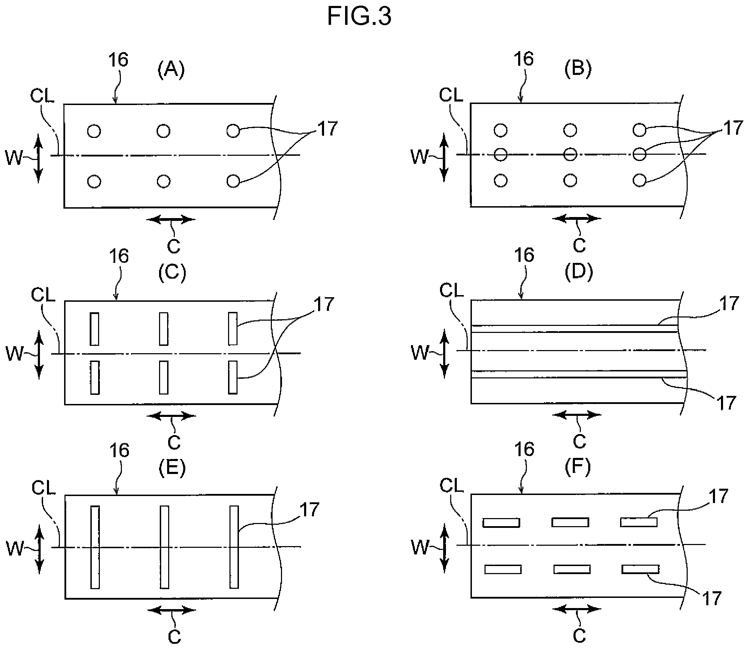

Figs. 3(A) to 3(F) are plan views schematically showing examples of an array of welded portions.

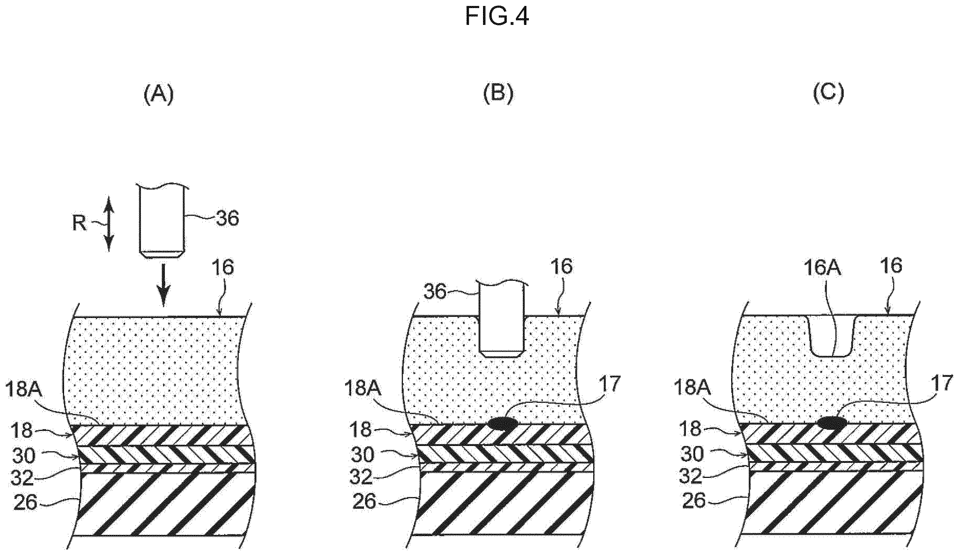

Fig. 4(A) is an enlarged cross-sectional view showing a state in which the sound absorbing body is disposed on an inner surface of the tire. Fig. 4(B) is an enlarged cross-sectional view showing a state in which a horn is pushed in a tire radial direction with respect to the sound absorbing body and the sound absorbing body and the inner surface of the tire are welded by ultrasonic welding. Fig. 4(C) is an enlarged cross-sectional view showing a state in which the welding is completed and a concave portion remains in a portion to which the horn is pushed.

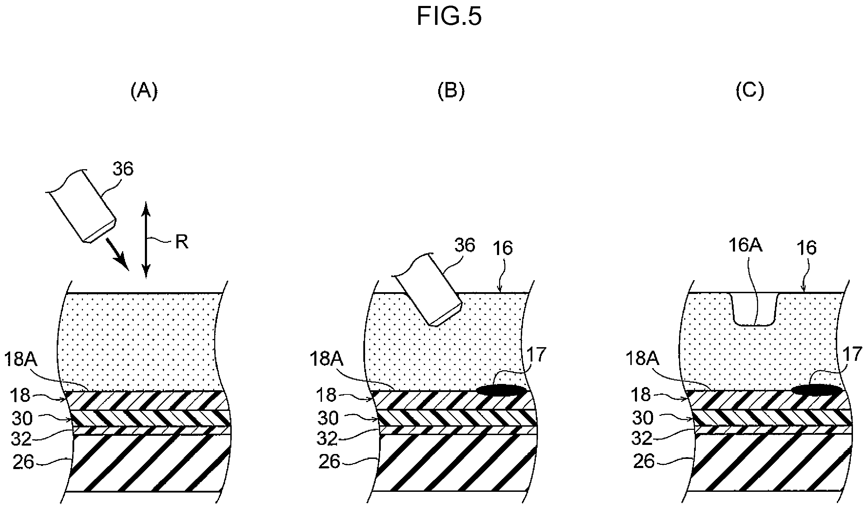

Fig. 5(A) is an enlarged cross-sectional view showing a state in which the sound absorbing body is disposed on an inner surface of the tire. Fig. 5(B) is an enlarged cross-sectional view showing a state in which the horn is pushed in an inclined direction of the tire radial direction with the sound absorbing body, and the sound absorbing body and the inner surface of the tire are welded by ultrasonic welding. Fig. 5(C) is an enlarged cross-sectional view showing a state in which the welding is completed and a concave portion remains in a portion to which the horn is pushed.

### DESCRIPTION OF EMBODIMENTS

Hereinafter, embodiments of the present invention will be described with reference to the drawings. In the drawings, a direction of an arrow C denotes a tire circumferential direction of a pneumatic tire, a direction of an arrow R denotes a tire radial direction of the pneumatic tire, and a direction of an arrow W denotes a tire width direction of the pneumatic tire. The tire radial direction of the pneumatic tire refers to a direction perpendicular to a rotation axis (not shown) of the pneumatic tire. The tire width direction refers to a direction parallel to the rotation axis of the tire. The tire width direction may also be referred to as a tire axial direction. Dimensions of each portion are measured by a method described in the 2015 YEAR BOOK issued by Japan Automobile Pneumatic Tire Association (JATMA).

In Fig. 1, when a pneumatic tire 10 according to the present embodiment is mounted on a rim 12, a tire and rim assembly 14 is formed. The pneumatic tire 10 has a tire frame member 18 and a sound absorbing body 16.

### (Tire Frame Member)

At least a tire inner surface 18A of the tire frame member 18 is made of a resin material, and for example, the tire frame member 18 is entirely made of a thermoplastic resin material. Specifically, the tire frame member 18 is formed in a ring shape in a tire circumferential direction by bonding a pair of tire pieces (not shown) made of the resin material in a tire axial direction on a tire equatorial plane CL. Further, the tire frame member 18 may be formed by bonding three or more tire pieces.

In addition, the tire frame member 18 has a pair of bead portions 20, a pair of side portions 22 extending to the outside in a tire radial direction from the pair of bead portions 20, respectively, and crown portions 24 extending to the inside in a tire width direction from the side portions 22.

Further, in the tire frame member 18 according to the present embodiment, a portion up to 30% of a cross section height SH from an inner side end in the tire radial direction is referred to as the bead portion 20, and a portion in which a tread 26 is disposed is referred to as the crown portion 24.

As the resin material configuring the tire frame member 18, a thermoplastic resin having the same elasticity as rubber, a thermoplastic elastomer (TPE), a thermosetting resin, and the like can be used. In consideration of the elasticity at the time of driving and formability at the time of manufacturing, it is preferable to use the thermoplastic elastomer. Further, all of the tire frame member 18 may be formed of the resin material, or only a part thereof may be formed of the resin material.

Examples of the thermoplastic elastomer can include a polyolefin type thermoplastic elastomer (TPO), a polystyrene type thermoplastic elastomer (TPS), a polyamide type thermoplastic elastomer (TPA), a polyurethane type thermoplastic elastomer (TPU), a polyester type thermoplastic elastomer (TPC), a dynamic crosslinking thermoplastic elastomer (TPV), and the like.

In addition, examples of the thermoplastic resin can include a polyurethane resin, a polyolefin resin, a vinyl chloride resin, a polyamide resin, and the like. The thermoplastic resin materials, for example, having a deflection temperature under load (at 0.45 MPa load) defined in ISO 75-2 or ASTM D648 at 78°C or more, a tensile yield strength defined in JIS K7113 of 10 MPa or more, a tensile elongation at break (JIS K7113) defined in JIS K7113 of 50% or more, and a Vicat softening temperature (method A) defined in JIS K7206 at 130°C or more can be used.

A bead core 28 is buried in the bead portion 20 of the tire frame member 18. As a material constituting the bead core 28, a metal, an organic fiber, an organic fiber coated with a resin, a metal fiber covered with a resin, a hard resin, or the like can be used. If rigidity of the bead portion 20 is secured and there is no problem in fitting with the rim 12, the bead core 28 may be omitted.

### (Belt Layer)

A belt layer 30 is provided at an outer-side in a tire radial direction of the tire frame member 18, more specifically, on an outer circumferential surface of the crown portion 24. The belt layer 30 is constituted by winding, for example, a cord covered with resin in a spiral shape in a tire circumferential direction. As the cord used in the belt layer 30, a steel cord can be used.

### (Reinforcing Layer on Belt)

A belt reinforcing layer 32 covering the belt layer 30 is disposed on the outside in the tire radial direction of the belt layer 30. The belt reinforcing layer 32 extends from the tire equatorial plane CL side beyond an end portion 30E of the belt layer 30 to the outside in the tire width direction and terminates near a boundary between the side portion 22 and the crown portion 24.

The belt reinforcing layer 32 includes a plurality of reinforcing cords (not shown) covered with rubber. The reinforcing cord of the belt reinforcing layer 32 is a monofilament (single wire) of organic fiber or a multifilament (stranded wire) twisted with organic fiber, and extends in the tire width direction and arranged in parallel in the tire circumferential direction. Further, the reinforcing cord of the belt reinforcing layer 32 may be inclined at an angle of 10° or less with respect to the tire width direction.

As the organic fiber, materials such as aliphatic polyamide, polyethylene terephthalate (PET), glass, aramid, and the like can be used. Further, as a material of the reinforcing cord, a metal such as steel or the like may be used. In addition, the reinforcing cord of the belt reinforcing layer 32 may be covered with a resin instead of the rubber.

### (Side Reinforcing Layer)

A side reinforcing layer 34 is disposed at an outer side surface side of the tire of the tire frame member 18. The side reinforcing layer 34 extends along an outer surface of the tire frame member 18 from the inside in the tire radial direction of the bead core 28 toward the outside in the tire radial direction. The side reinforcing layer 34 further extends to the tire equatorial plane CL side along an outer surface of the belt reinforcing layer 32 and terminates near the end portion 30E beyond an end portion 32E of the belt reinforcing layer 32 and the end portion 30E of the belt layer 30.

The side reinforcing layer 34 includes a plurality of reinforcing cords covered with rubber. The reinforcing cord of the side reinforcing layer 34 is a monofilament (single wire) of organic fiber or a multifilament (stranded wire) twisted with organic fiber, and each extends in a radial direction (the tire radial direction) and is arranged in parallel in the tire circumferential direction. Further, the reinforcing cord of the side reinforcing layer 34 may be inclined at an angle of 10° or less with respect to the tire radial direction.

As the organic fiber, materials such as aliphatic polyamide, PET, glass, aramid, and the like can be used. Further, as a material of the reinforcing cord, a metal such as steel or the like may be used. In addition, the reinforcing cord of the side reinforcing layer 34 may be covered with a resin instead of the rubber.

### (Sound Absorbing Body)

In Fig. 1, the sound absorbing body 16 is made of a thermoplastic resin material and can absorb sound, and is coupled to the tire inner surface 18A via the welded portion 17. The sound absorbing body 16 is, for example, a sheet-like porous body such as a sponge, a foamed resin, or the like, and can absorb sound generated by a cavity resonance of the pneumatic tire 10. The sound absorbing body 16 is provided, for example, within the range of the belt layer 30 in the tire width direction. The sound absorbing body 16 is not limited thereto and may further extend along the tire inner surface 18A to the outside in the tire width direction than the end portion 30E in the tire width direction of the belt layer 30. In this case, it is preferable that the welded portion 17 is provided within the range of the belt layer 30.

The sound absorbing body 16 may be disposed in the entirety of the tire circumferential direction as shown in Fig. 2(A) and may also be discretely disposed in the tire circumferential direction as shown in Fig. 2(B). In the case in which the sound absorbing body 16 is discretely disposed, it is preferable that a small number of sound absorbing bodies 16 are non-uniformly disposed in the tire circumferential direction in consideration of uniformity of the pneumatic tire 10 or the like.

In Fig. 1, the welded portion 17 is a portion at which the tire inner surface 18A and the sound absorbing body 16 are welded by ultrasonic welding. The welded portion 17 is provided in a range overlapping the belt layer 30 in the tire radial direction. In other words, the welded portion 17 is provided in a corresponding range between end portions 30E of both sides in the tire width direction of the belt layer 30, in the tire width direction. In the shown example, the welded portions 17 are discretely provided in the tire circumferential direction at both sides of the tire equatorial plane CL in the tire width direction.

It is desirable to weld an end portion, which becomes a free end, of the sound absorbing body 16 as much as possible. In addition, in the sound absorbing body 16 continuous in the tire circumferential direction, a length in the tire circumferential direction becomes longer. In order to suppress the sound absorbing body 16 from drooping apart from the tire inner surface 18A when the tire is not rotating, it is preferable to further weld one intermediate portion of the sound absorbing body 16 in the tire circumferential direction.

Therefore, as shown in Fig. 2(A), in the case of using a sponge continuous in the tire circumferential direction as the sound absorbing body 16, the welded portions 17 are provided at two end portions in the tire circumferential direction and one portion of the intermediate portion thereof. As shown in Fig. 2(B), in the case of using a sponge which is not continuous in the tire circumferential direction as the sound absorbing body 16, the welded portions 17 are provided to at least both end portions in the tire circumferential direction.

In the case in which the tire frame member 18 is formed by bonding a pair of tire pieces (not shown) to the tire equatorial plane CL, it is preferable to provide the welded portions 17 avoiding a bonded portion (the tire equatorial plane CL). "Both sides of the tire equatorial plane CL in the tire width direction" means that the welded portions 17 are provided avoiding the bonded portion of the tire piece as described above. When the welded portion 17 is provided, it is preferable that a horn 36 (see Figs. 4 and 5) used for welding does not overlap the bonded portion (the tire equatorial plane CL) of the tire frame member 18 in the tire radial direction.

Since the horn 36 (Figs. 4 and 5) is pushed into the tire radial direction inner surface of the sound absorbing body 16 during ultrasonic welding, there is a case that a concave portion 16A remains due to an influence of the pushed horn 36. A position of the concave portion 16A substantially corresponds to a position of the welded portion 17.

In a plane view of the sound absorbing body 16, the array and shape of the welded portion 17 can be variously changed by adjusting a shape of the horn 36 or the welding position. The array of the welded portions 17 shown in Fig. 3(A) corresponds to Fig. 1. In the example, the welded portions 17 are each formed in a circular shape and are discretely disposed in the tire circumferential direction at both sides of the tire equatorial plane CL in the tire width direction.

The welded portions 17 shown in Fig. 3(B) are each formed in a circular shape, and are discretely disposed on the tire equatorial plane CL and in the tire circumferential direction at both sides of the tire equatorial plane CL in the tire width direction.

The welded portions 17 shown in Fig. 3(C) are each formed in a straight shape extending in the tire width direction, and are discretely disposed in the tire circumferential direction at both sides of the tire equatorial plane CL in the tire width direction.

The welded portions 17 shown in Fig. 3(D) are continuously disposed in the tire circumferential direction at both sides of the tire equatorial plane CL in the tire width direction.

The welded portions 17 shown in Fig. 3(E) are each formed in a straight shape extending on both sides of the tire equatorial plane CL in the tire width direction including the tire equatorial plane CL, and are discretely disposed in the tire circumferential direction.

The welded portions 17 shown in Fig. 3(F) are intermittently extended in the tire circumferential direction on both sides of the tire equatorial plane CL in the tire width direction.

In the case in which the welded portions 17 are disposed at both sides of the tire equatorial plane CL and are discretely or continuously disposed in the tire circumferential direction, the number of the welded portions 17 at both sides of the tire equatorial plane CL at positions in the tire circumferential direction in which the welded portions 17 exist is, for example, one for each of both sides. That is, two welded portions 17 are arranged in the tire width direction. In addition, each of the welded portions 17 is arranged in the tire circumferential direction. In other words, the position in the tire width direction of each of the welded portions 17 is constant irrespective of the position in the tire circumferential direction. As a result, the welded portions 17 can be efficiently formed using the two horns 36 (Figs. 4 and 5).

Further, although not shown, the welded portions 17 may be disposed in a zigzag shape. In addition, in a developed state (plan view) of the sound absorbing body 16, an upper limit of a ratio of an area of the welded portions 17 to an area of the sound absorbing body 16 is 10%. If the upper limit is greater than 10%, the man-hour of the welding is significantly increased.

### (Action)

The present embodiment is configured as described above and an action thereof will be described below. In the pneumatic tire 10 according to the present embodiment in Fig. 1, since at least the tire inner surface 18A of the tire frame member 18 is made of the resin material, a bladder (not shown) does not adhere to the tire inner surface 18A during vulcanization unlike the case in which the tire inner surface 18A is made of rubber. Therefore, a process of applying a silicone-based releasing agent as a measure for preventing adhesion of the bladder becomes unnecessary. In addition, since the sound absorbing body 16 made of the thermoplastic resin material is coupled to the tire inner surface 18A made of the resin material via the welded portions 17, a process of disposing the adhesive layer on the sound absorbing body 16 becomes unnecessary. For this reason, compared to the case in which the sound absorbing body 16 is bonded to the tire inner surface 18A, the number of processes is reduced, resulting in low cost.

In addition, in the present embodiment, since not only the sound absorbing body 16 but also the tire frame member 18 is made of the thermoplastic resin material, the welding of the sound absorbing body 16 and the tire inner surface 18A becomes easy. At the time of welding, the tire inner surface 18A of the tire frame member 18 melts once, but since the welded portions 17 are provided in the range overlapping the belt layer 30 in the tire radial direction, an influence on a change in strength due to the melting of the tire frame member 18 once can be ignored.

In addition, in the present embodiment, since the welded portions 17 are portions in which the tire inner surface 18A and the sound absorbing body 16 are welded by ultrasonic welding, the welded portions 17 exist locally. Therefore, at the time of recycling the pneumatic tire 10, it is easy to separate the sound absorbing body 16 from the tire frame member 18, that is, to separate the sound absorbing body 16 from the tire frame member 18.

Since the welded portion 17 are provided continuously, intermittently, or discretely in the tire circumferential direction at both sides of the tire equatorial plane CL in the tire width direction, at the time of ultrasonic welding, the portion of the tire frame member 18 corresponding to the tire equatorial plane CL does not melt. For this reason, a change in strength of the portion can be suppressed. That is, since the tire inner surface 18A and the sound absorbing body 16 are welded avoiding the bonded portions (not shown) of the tire frame member 18, a change in strength of the bonded portions can be suppressed.

As described above, by the pneumatic tire according to the present embodiment, the pneumatic tire on which the sound absorbing body 16 is disposed may be provided at low cost.

### [Method of Manufacturing Pneumatic Tire]

A method of manufacturing a pneumatic tire according the present embodiment has a process of manufacturing a tire frame member 18 having a tire inner surface 18A made of a resin material and a process of welding a sound absorbing body 16, which is made of a thermoplastic resin material and is configured to absorb sound, to the tire inner surface 18A.

Fig. 4 shows a method of pushing an ultrasonic welding horn 36 in a tire radial direction. As shown in Fig. 4(A), the sound absorbing body 16 is disposed on the tire inner surface 18A, and in an example shown in Fig. 4(B), the horn 36 is pushed from the inside in the tire radial direction of the sound absorbing body 16 toward the outside thereof, the ultrasonic wave acts on a boundary portion between the sound absorbing body 16 and the tire inner surface 18A, and the sound absorbing body 16 and the tire inner surface 18A are melted and fused together. As a result, a welded portion 17 is formed. As shown in Fig. 4(C), when the horn 36 is pulled out from the sound absorbing body 16, a concave portion 16A remains in the portion to which the horn 36 is pushed.

Next, Fig. 5 shows a method of pushing the ultrasonic welding horn 36 in an inclined direction with respect to the tire radial direction. As shown in Fig. 5(A), the sound absorbing body 16 is disposed on the tire inner surface 18A, and in an example shown in Fig. 5(B), the horn 36 is pushed in an inclined direction with respect to the tire radial direction of the sound absorbing body 16, the ultrasonic wave acts on a boundary portion between the sound absorbing body 16 and the tire inner surface 18A, and the sound absorbing body 16 and the tire inner surface 18A are melted and fused together. As a result, a welded portion 17 is formed. As shown in Fig. 5(C), when the horn 36 is pulled out from the sound absorbing body 16, a concave portion 16A remains in the portion to which the horn 36 is pushed. In the case of using a circular horn 36, the welded portion 17 is circular in plan view (see Figs. 3(A) and 3(B) in the example of Fig. 4, but the welded portion 17 is elliptical in the example of Fig. 5. Therefore, it is possible to make the welded range longer than in the case of Fig. 4.

In the method of manufacturing the pneumatic tire, since at least the tire inner surface 18A of the tire frame member 18 is made of the resin material, a bladder (not shown) does not adhere to the tire inner surface 18A during vulcanization unlike the case in which the tire inner surface 18A is rubber. Therefore, a process of applying a silicone-based releasing agent as a measure for preventing adhesion of the bladder becomes unnecessary. In addition, since the sound absorbing body 16 made of the thermoplastic resin material is welded to the tire inner surface 18A made of the resin material, a process of disposing the adhesive layer on the sound absorbing body 16 becomes unnecessary. For this reason, compared to the case in which the sound absorbing body 16 is bonded to the tire inner surface 18A, the number of processes is reduced, resulting in low cost.

### [Other Embodiments]

Hereinabove, although the example of the embodiment of the present invention has been described, the embodiment of the present invention is not limited to the above description, and various modifications can be made without departing from the scope of the invention in addition to the embodiment above.

The tire frame member 18 of the pneumatic tire 10 is made of the resin material, but the pneumatic tire 10 may be a rubber tire using a carcass ply (not shown). In this case, a film inner liner is provided on the tire inner surface 18A, and the sound absorbing body 16 can be welded to the film inner liner.

The welding means is not limited to ultrasonic welding, but may be thermal welding.

The sound absorbing body 16 is made of a sheet-like sponge, but the material of the sound absorbing body 16 is not limited thereto and may be a nonwoven fabric or the like.

The disclosure of Japanese Patent Application No. 2016-48630 filed on March 11, 2016 is hereby incorporated by reference in its entirety.

All documents, patent applications, and technical standards mentioned in the present specification are hereby incorporated by reference to the same extent as a case in which individual documents, patent applications, and technical standards are specifically and individually indicated to be hereby incorporated by reference.

## Claims

1. A pneumatic tire comprising:
a tire frame member having a tire inner surface made of a resin material; and
a sound absorbing body that is made of a thermoplastic resin material, that is configured to absorb sound, and that is coupled to the tire inner surface via a welded portion.

2. The pneumatic tire according to claim 1, wherein:
the tire frame member is made of a thermoplastic resin material,
a belt layer is provided at an outer-side in a tire radial direction of the tire frame member, and
the welded portion is provided in a range overlapping with the belt layer in the tire radial direction.

3. The pneumatic tire according to claim 2, wherein the sound absorbing body is provided in a range of the belt layer in a tire width direction.

4. The pneumatic tire according to any one of claims 1 to 3, wherein the welded portion is a portion at which the tire inner surface and the sound absorbing body are welded by ultrasonic welding.

5. The pneumatic tire according to claim 4, wherein the welded portion is continuously, intermittently, or discretely provided in a tire circumferential direction at both sides of a tire equatorial plane in a tire width direction.

6. A method of manufacturing a pneumatic tire, the method comprising:
a process of manufacturing a tire frame member having a tire inner surface made of a resin material; and
a process of welding a sound absorbing body, which is made of a thermoplastic resin material and is configured to absorb sound, to the tire inner surface.
